# EUROPÄISCHE PATENTSCHRIFT

(11) **EP 2 286 891 B1**
(45) Veröffentlichungstag und Bekanntmachung des Hinweises auf die Patenterteilung: **23.05.2012**
(21) Anmeldenummer: 10169193.9
(22) Anmeldetag: 12.07.2010
(51) Int. Cl.: B01D 46/10, B01D 46/00, B01D 46/12

(54) **Filtervorrichtung zur Filtration eines mit Aerosolen und/oder Stäuben beladenen Gasstroms**
Filter device for filtering a gas flow charged with aerosols and/or dust particles
Dispositif de filtre destiné à la filtration d'un flux de gaz chargé d'aérosols et/ou de poussières

(30) Priorität: 20.07.2009 DE 102009027840
(43) Veröffentlichungstag der Anmeldung: 23.02.2011
(73) Patentinhaber: YIT Germany GmbH, 80992 München (DE)
(72) Erfinder: Martinsteg, Dipl.-Ing., Hans, 52159, Roetgen (DE)
(74) Vertreter: Bauer, Dirk

(56) Entgegenhaltungen:
- DE-A1- 3 046 775
- US-A- 5 665 145

## Beschreibung

Die Erfindung betrifft eine Filtervorrichtung zur Filtration eines mit Aerosolen und/oder Stäuben beladenen Gasstroms, mit einem Gehäuse, das einen Rohgaseinlass und einen Reingasauslass aufweist und mit einer Mehrzahl von kastenförmigen Filterelementen bestückbar ist, die auf einer Halte- und Führungseinrichtung linear verschiebbar und in einer Betriebsstellung nebeneinander angeordnet sind. Zwecks Wechsel durch eine Wechselöffnung des Gehäuses sind die Filterelemente aus diesem entnehmbar bzw. in dieses einführbar, wobei die Filterelemente zusammen mit der Halte- und Führungseinrichtung eine Trennung zwischen einer Rohgasseite und einer Reingasseite der Vorrichtung dergestalt bilden, dass der zu filtrierende Gasstrom nur durch in den Filterelementen befindliches Filtermedium hindurch von der Rohgasseite auf die Reingasseite übertreten kann. Die Fördereinrichtung weist ein langgestrecktes Förderorgan auf, das mit einem Mitnehmerelement ausgestattet ist, das mit einem Filterelement koppelbar ist, wobei mindestens ein Filterelement bei einem Förderhub des Förderorgans in Richtung auf die Wechselöffnung zu förderbar ist. Darüber hinaus hat die Erfindung ein Verfahren zum Wechseln von Filterelementen einer Filtrationsvorrichtung zur Filtration eines mit Aerosolen und/oder Stäuben beladenen Gasstroms nach dem Oberbegriff des Anspruchs 9 zum Gegenstand.

### Stand der Technik

Bei Filtereinrichtungen, die insbesondere in kerntechnischen Anlagen oder in biologischen Laboren eingesetzt werden, erfolgt der Wechsel der kontaminierten Filterelemente typischerweise mittels der Schutzsack-Wechselmethode, wobei sich der Wechsel insbesondere bei Anlagen mit mehreren hintereinander geschalteten Filterelementen insofern schwierig gestaltet, als dass lediglich das erste, der Wechselöffnung zugewandte Filterelement erreichbar ist. Müssen auch die weiteren Filterelemente ohne Hilfsmittel ausgetauscht werden, ist der Zutritt von entsprechend mit einer Schutzausrüstung ausgestattetem Bedienpersonal erforderlich, das die weiteren Filterelemente zu der Wechselöffnung vorschiebt.

Um den Zutritt von Personal in die Vorrichtung zu vermeiden ist aus der DE 198 37 775 A1 eine gattungsgemäße Filtervorrichtung bekannt, bei der die einzelnen Filterelemente auf zwei verschiedene Weisen entnommen bzw. eingeführt werden können. Eine erste Methode besteht darin, die Filterelemente mittels einer als Schiebeblech ausgebildeten Transporteinrichtung zu bewegen, wobei das Schiebeblech an seinem Ende eine Art Mitnehmer besitzt, der hinter dem letzten Filterelement angreift, das heißt hinter dem von der Wechselöffnung am weitesten entfernten Filterelement. Nachteil dieser Transporteinrichtung ist, dass das Schiebeblech lediglich über einen Betrag herausziehbar ist, der in etwa der Länge eines Filterelements beziehungsweise der Länge des Schutzsacks entspricht, so dass die bekannte Transporteinrichtung nur sinnvoll nutzbar ist, wenn lediglich zwei oder maximal drei Filterelemente hintereinander angeordnet sind.

Die zweite aus der DE 198 37 775 A1 bekannte Methode zur Entnahme oder Einführung der Filterelemente besteht darin, benachbarte Filterelemente jeweils über eine zugbelastbare Kopplungseinrichtung miteinander zu verbinden. Bei der Entnahme eines ersten Filterelements wird das zweite benachbarte Filterelement bis an die Wechselöffnung gezogen und dann erst entkoppelt, so dass sich das zweite Filterelement bereits in seiner Entnahmeposition befindet. Zwar ist der Austausch von Filterelementen nach dieser Methode einfach und komfortabel, jedoch ist der Einsatz von Standard-filterelementen nicht möglich. Alle eingesetzten Filterelemente müssen mit entsprechenden Kopplungselementen versehen sein, um einen Austausch derselben zu ermöglichen.

In der DE 30 46 775 A1 wird ein Filtergehäuse mit mehreren hintereinander angeordneten Filterelementen beschrieben, die über eine als Stange ausgebildete Fördereinrichtung eingesetzt oder aber entnommen werden können. Hierzu besitzt die Stange seitlich abstehende Finger, die alle in die gleiche Richtung von der Stange weisen, wobei die Finger jeweils einen Abstand zueinander aufweisen, der etwa der Breite eines Filterelements entspricht. Zur Entnahme der Filterelemente wird die Stange so gedreht, dass die Finger jeweils hinter einem Filterelement angreifen, und die Filterelemente durch Herausziehen der Stange aus dem Filtergehäuse ebenfalls aus dem Filtergehäuse gelangen. Da die Finger jedoch bei Drehung der Stange allesamt in die Ebene der Filterelemente gelangen, muss zwischen den Filterelementen zwingend ein entsprechend großer Spalt vorhanden sein.

### Aufgabe

Es ist Aufgabe der vorliegenden Erfindung, eine Vorrichtung sowie ein entsprechendes Verfahren bereit zu stellen, mit der beziehungsweise dem ein Wechsel von Standard- Filterelementen auf einfache und komfortable Weise erfolgen kann.

### Lösung

Ausgehend von der eingangs genannten Filtervorrichtung wird die vorgenannte Aufgabe dadurch gelöst, dass das Förderorgan mindestens ein weiteres Mitnehmerelement besitzt, das in Längsrichtung des Förderorgans betrachtet zum einen um einen Winkel α gegenüber dem ersten Mitnehmerelement verdreht und zum anderen in einem Abstand von dem ersten Mitnehmerelement angeordnet ist, der mindestens der Länge eines Filterelements entspricht. Wird das Förderorgan um seine Längsrichtung gedreht, so gelangt jeweils ein anderes Mitnehmerelement mit einem Filterelement in Eingriff, so dass nicht nur das letzte Filterelement in Richtung der Wechselöffnung bewegt werden kann, sondern ebenfalls näher an der Wechselöffnung befindliche Filterelemente.

Vorteilhafterweise ist das Förderorgan hin und her bewegbar, wobei das erste Mitnehmerelement am Ende des Förderorgans angeordnet ist. Das bedeutet, dass es - analog zu dem Mitnehmerelement der DE 198 37 775 A1 - hinter oder an dem von der Wechselöffnung am weitesten entfernten Filterelement angreift. **Ist** ein erstes, an der Wechselöffnung befindliches Filterelement bereits aus der Vorrichtung herausgenommen worden, so wird das Förderorgan in einer Stellung, in der das erste Mitnehmerelement mit dem letzten, von der Wechselöffnung am weitesten entferntesten Filterelement in Eingriff ist, in Richtung der Wechselöffnung bewegt, wodurch das letzte Filterelement die übrigen Filterelemente in Richtung der Wechselöffnung schiebt, bis ein zweites Filterelement nunmehr bis an die Wechselöffnung vorgeschoben wurde und bequem mittels der Schutzsack-Wechselmethode herausgenommen werden kann.

Demzufolge entspricht der Betrag des Förderhubs des Förderorgans mindestens der in Längsrichtung der Fördereinrichtung gemessenen Länge eines Filterelements. Aufgrund der begrenzten Abmessungen des Schutzsacks kann der Förderhub des Förderorgans jedoch nicht viel größer sein als die Länge eines Filterelements.

Nach der Entnahme des zweiten Filterelements wird das Förderorgan wieder zurück bewegt (Rückhub) und derart um seine Längsachse gedreht, bis das zweite Mitnehmerelement hinter oder an das abermals letzte und am weitesten von der Wechselöffnung entfernteste aber um einen Platz nach vorne (in Richtung der Wechselöffnung) gerückte Filterelement gelangt. Wird das Förderorgan nun nochmals um seinen identischen Förderhub bewegt, so werden die noch in der Filtervorrichtung befindlichen Filterelemente wieder in Richtung der Wechselöffnung bewegt, bis sich - nach Vollendung des Förderhubs - das dritte Filterelement an der Wechselöffnung befindet.

Auf diese Weise können mit der Ausführung ein und desselben Förderhubs verschiedene Filterelemente mit jeweils einem Mitnehmerelement gekoppelt und bewegt werden.

Dabei ist es insbesondere von Vorteil, dass die Filterelemente keinen Abstand zueinander aufweisen müssen, sondern vielmehr einander berührend hintereinander angeordnet werden können, da das erfindungsgemäße Förderorgan so konzipiert ist, dass ein Mitnehmerelement immer nur an dem letzten - also an dem von der Wechselöffnung am weitesten entfernten Filterelement - angreift. Kurz gesagt, wird durch entsprechendes Drehen des Förderorgans das entsprechende Mitnehmerelement immer nur mit dem letzten Filterelement in Kontakt gebracht.

Vorteilhafterweise ist das Förderorgan eine Mitnehmerstange, an der eine Mehrzahl von Mitnehmerelementen, vorzugsweise in Form von radial von der Mitnehmerstange abstehenden Mitnehmerarmen, angebracht ist, wobei der Abstand zwischen benachbarten Mitnehmerelementen ungefähr der Länge eines Filterelements entspricht. Dabei entspricht die Anzahl der Mitnehmerelemente weiter vorzugsweise der Anzahl der Filterelemente minus eins, so dass ein letztes, am weitesten von der Wechselöffnung entferntes Filterelement nach entsprechend mehrmaliger Betätigung des Förderorgans bis an die Wechselöffnung gezogen werden kann.

Eine Ausgestaltung der Erfindung sieht vor, dass benachbarte Mitnehmerelemente, in Längsrichtung der Mitnehmerstange betrachtet, um 90° gegeneinander verdreht sind.

Es ist von Vorteil, wenn das Förderorgan von einer Ruhestellung, in der es vollständig innerhalb des Gehäuses, dessen Wechselöffnung mit einem Deckel verschlossen ist, angeordnet ist, durch Manipulation eines Betätigungselements, vorzugsweise in Form eines Handhebels oder Handrades, das an dem der Wechselöffnung zugeordneten Endabschnitt des Förderorgans angeordnet ist, in eine Entnahmestellung verlagerbar ist, in der sich das Förderorgan mit seinem vorgenannten Endabschnitt in dem Wechselsack befindet. Somit kann eine Kontamination des Umfeldes der Filtervorrichtung nicht durch die Betätigung des Förderorgans eintreten.

Dabei ist es ferner vorteilhaft, wenn dem Betätigungselement eine Positionsanzeige zugeordnet ist, der für einen Bediener Informationen über die Winkelstellung der Mitnehmerstange entnehmbar sind. Eine Winkelstellung kann beispielsweise einem bestimmten Filterelement zugeordnet sein, so dass der Bediener die Mitnehmerstange leicht entsprechend des zu entnehmenden Filterelements verdrehen kann.

Die Fördereinrichtung kann aus einem inneren Rohr und einem äußeren Rohr gebildet sein, wobei die Mitnehmerstange durch das äußere Rohr gebildet wird, das teleskopartig relativ zu dem inneren Rohr verschiebbar ist. Somit ist eine sichere und stabile Führung der Mitnehmerstange gewährleistet.

Das Förderorgan kann zusätzlich oder alternativ auf Stützen der Fördereinrichtung abgestützt sein, die eine Relatiwerschiebung zwischen Stützen und Förderorgan erlaubten.

Verfahrenstechnisch wird die eingangs genannte Aufgabe dadurch gelöst, dass die Kopplung zwischen dem Förderorgan und dem jeweiligen Filterelement dadurch hergestellt oder aufgehoben wird, dass das Förderorgan um seine Längsachse, die sich parallel zu der Halte- und Führungseinrichtung erstreckt, gedreht wird. In Abhängigkeit von den einzelnen durch Drehung erreichten Positionen des Förderorgans befinden sich gegebenenfalls verschiedene Mitnehmerelemente mit verschiedenen Filterelementen in Eingriff. Das erfindungsgemäße Verfahren kann insbesondere mit einer vorbeschriebenen Filtervorrichtung durchgeführt werden.

### Ausführungsbeispiel

Die Erfindung wird nachfolgend anhand von Ausführungsbeispielen erfindungsgemäßer Vorrichtungen, die in den Figuren schematisch dargestellt sind, näher erläutert.

Es zeigt
- Fig. 1, 2, 3, 4, 5, 6, 7, 8:: jeweils einen Vertikalschnitt durch eine erfindungs- gemäße Filtervorrichtung mit einem Förderorgan In verschiedenen Positionen und mit verschiedener An- zahl von Filterelementen,
- Fig. 1a, 2a, 3a, 4a, 5a, 6a, 7a, 8a:: eine Ansicht des Bedienhebels der Vorrichtung aus den entsprechenden Figuren 1, 2, 3, 4, 5, 6, 7, 8,

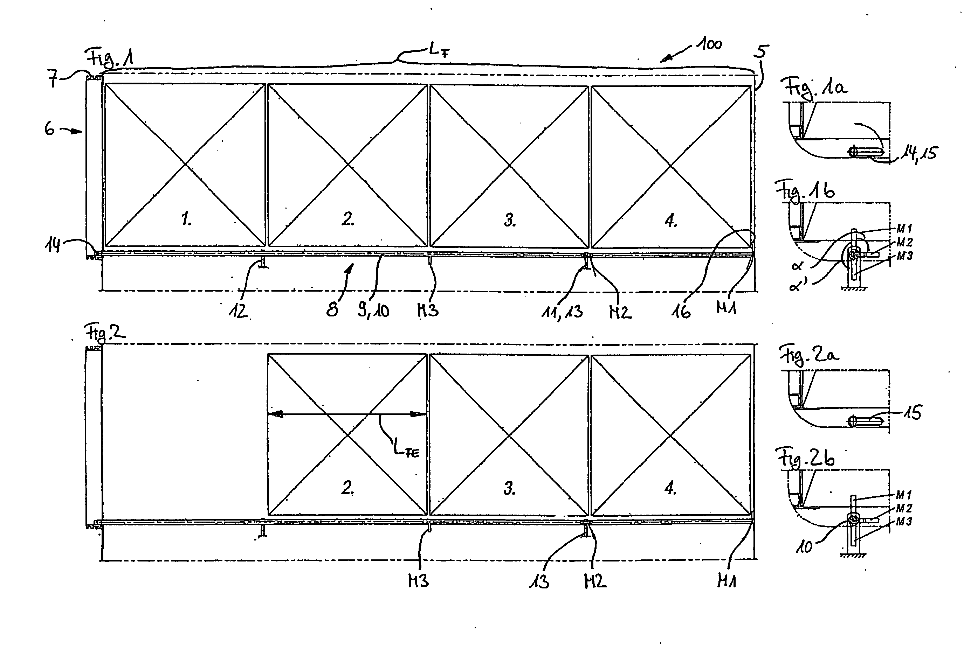

- Fig. 1 b, 2b, 3b, 4b, 5b, 6b, 7b, Bb:: eine Ansicht der Mitnehmerelemente der Vorrichtung aus den entsprechenden Figuren 1, 2, 3, 4, 5, 6, 7, 8,

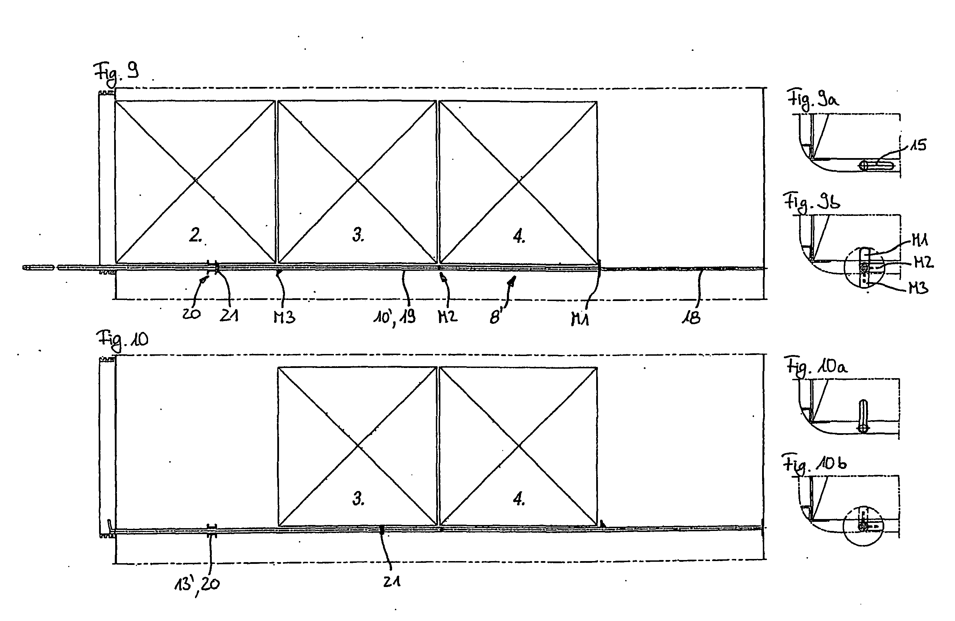

- Fig. 9, 10:: jeweils einen Vertikalschnitt durch eine weitere erfindungsgemäße Filtervorrichtung mit einem Förderorgan in verschiedenen Positionen und mit verschiedener Anzahl von Filterelementen,
- Fig. 9a, 10a:: eine Ansicht des Bedienhebels der Vorrichtung aus den entsprechenden Figuren 9 und 10 und
- Fig. 9b, 10b:: eine Ansicht der Mitnehmerelemente der Vorrichtung aus den entsprechenden Figuren 9 und 10.

In der Figur 1 ist eine erfindungsgemäße Filtervorrichtung 100 in einem Vertikalschnitt gezeigt, die zur Filtration von mit Aerosolen oder Stäuben beladenen Gasströmen dient. Die Filtervorrichtung 100 besitzt ein Filtergehäuse 5, das einen nicht dargestellten Rohgaseinlass und einen ebenfalls nicht dargestellten Reingasauslass aufweist, wobei der Rohgaseinlass senkrecht zu der Zeichnungsebene vor kastenförmigen Filterelementen 1, 2, 3, 4 und der Reingasauslass hinter den Filterelementen 1, 2, 3, 4 liegt, die demnach senkrecht zu der Zeichnungsebene durchströmt werden. Die Filterelemente 1, 2, 3, 4, die einer einfacheren Bezugnahme halber von 1 bis 4 durchnummeriert sind, sind auf bekannte Weise mit randnahen Dichtungen in dem Filtergehäuse 5 gasdicht eingespannt.

Die Figur 1 zeigt lediglich eine Reihe aus vier nebeneinander angeordneten Filterelementen 1, 2, 3 ,4, wobei die Filtervorrichtung 100 typischerweise noch weitere darüber oder darunter befindliche Reihen aus ebenfalls vier Filterelementen besitzt. Die Filtervorrichtung 100 befindet sich in ihrer Grundstellung beziehungsweise Betriebsstellung, in der alle vier Filterelemente 1, 2, 3, 4 mit quadratischem Querschnitt auf einer nicht in der Figur 1 dargestellten Halte- und Führungseinrichtung angeordnet sind.

Die Filtervorrichtung 100 besitzt eine Wechselöffnung 6, durch die die einzelnen Filterelemente 1, 2, 3, 4 zwecks Austausch derselben hindurch geführt werden können, wobei die entnommenen kontaminierten Filterelemente 1, 2, 3, 4 in einen nicht dargestellten, umlaufend an einem Wechselöffnungskragen 7 befestigten Wechselsack gegeben werden, der daraufhin gasdicht verschlossen und entnommen wird.

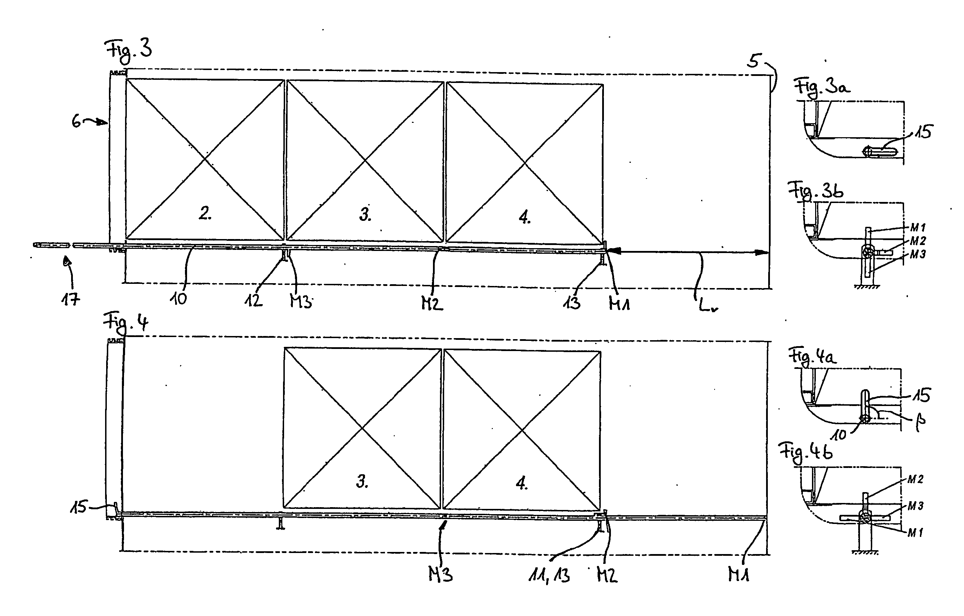

Unterhalb der Filterelemente 1, 2, 3, 4 befindet sich ferner eine Fördereinrichtung 8, die sich über die gesamte Länge L_{F} des Filtergehäuses 5 erstreckt und die aus einer ein Förderorgan 9 bildende Mitnehmerstange 10 und zwei Führungen 11, 12 zusammengesetzt ist. Die Mitnehmerstange 10 ist in horizontale Richtung hin und her bewegbar, wobei eine Verschiebung der Mitnehmerstange 10 in Richtung der Seite der Wechselöffnung 6 als Förderhub und in die entgegengesetzte Richtung als Rückhub bezeichnet wird. Die erste Führung 11 ist als Anschlag 13 ausgebildet, der einen Verschiebeweg der Mitnehmerstange 10 nur über eine Länge L_{V} (Figur 3) erlaubt, die lediglich der Länge L_{FE} von etwa einem Filterelement 1, 2, 3, 4 entspricht. Anders ausgedrückt, kann die Mitnehmerstange 10 ausgehend von ihrer in der Figur 1 dargestellten Lage nur soweit verschoben werden, bis ein erstes Mitnehmerelement M1 an den Anschlag 13 gelangt.

Das Förderorgan 9 ist ferner mit einem zweiten und dritten Mitnehmerelement M2, M3 versehen, wobei alle Mitnehmerelemente M1, M2, M3 jeweils aus einem radial von der Mitnehmerstange 10 abstehenden Mitnehmerarm gebildet werden. Das erste Mitnehmerelement M 1 befindet sich an dem der Wechselöffnung 6 abgewandten Ende des förderorgans 9, also hinter dem vierten Filterelement 4; das zweite Mitnehmerelement M2 befindet sich in etwa zwischen dem dritten und vierten Filterelement 3, 4 und das dritte Mitnehmerelement M3 In etwa zwischen dem zweiten und dritten Filterelement 2, 3. Folglich gibt es ein Mitnehmerelement M1, M2, M3 weniger, als Filterelemente 1, 2, 3, 4 vorhanden sind.

An dem Ende der Mitnehmerstange 10, das sich im Bereich der Wechselöffnung 6 befindet, besitzt die Mitnehmerstange 10 ein Betätigungselement 14 in Form eines Handhebels 15, mittels dem die Mitnehmerstange 10 gedreht werden kann. Der Handhebel 15 ist in der Figur 1a erkennbar, die eine Ansicht der Filtervorrichtung 100 im Bereich des Handhebels 15 darstellt. In der Figur 1 a befindet sich der Handhebel 15 in einer horizontalen Position, wobei die hierzu korrespondierende Lage der einzelnen Mitnehmerelemente M 1, M2, M3 in der Figur 1b zu erkennen ist.

Das Mitnehmerelement M1 ist in Längsrichtung der Mitnehmerstange 10 betrachtet um einen Winkel α von 90° gegenüber dem Mitnehmerelement M2 und um einen Winkel α' von 180° gegenüber dem Mitnehmerelement M3 verdreht. Das bedeutet, dass das erste Mitnehmerelement M 1 vertikal nach oben steht und an einer hinteren Kante 16 des vierten Filterelements 4 angreift. Das zweite Mitnehmerelement M2 verläuft in den Figuren 1 und 1b horizontal, also unterhalb der Aufstandsebene der Filterelemente 1, 2, 3, 4 und das dritte Mitnehmerelement M3 zeigt vertikal nach unten, so dass es ebenfalls von den Filterelementen 1, 2, 3, 4 weg gerichtet ist.

Die Figuren 2, 2a und 2b entsprechen den Figuren 1, 1a und 1b. Der einzige Unterschied zwischen den Figuren 1 und 2 besteht darin, dass Figur 2 die Filtervorrichtung 100 nach Herausnahme des ersten Filterelements 1 darstellt. Da sich das erste Filterelement 1 unmittelbar an der Wechselöffnung 6 befand (Figur 1), konnte dieses ohne großen Aufwand von dem Bedienpersonal manuell nach der bekannten Schutzsack-Wechselmethode aus der Filtervorrichtung 100 genommen werden.

Die Länge L_{FE} eines Filterelements 1, 2, 3, 4 beträgt etwa 60 cm, weshalb das Bedienpersonal das zweite Filterelement 2 nicht ohne Weiteres ergreifen und herausnehmen kann. Um das zweite Filterelement 2 in eine Position zu überführen, in der es bequem herausgenommen werden kann, wird die Mitnehmerstange 10 in ihrer in der Figur 2b gezeigten Stellung um ihren Förderhub bewegt, so dass das vierte Filterelement 4 - und somit ebenfalls das dritte und zweite Filterelement 3, 4 - mittels des ersten Mitnehmerelements M 1 in Richtung der Wechselöffnung 6 gefördert werden, bis das Mitnehmerelement M1 an den Anschlag 13 stößt (Figur 3).

Die daraus resultierende Lage der Filterelemente 2, 3, 4 ist in der Figur 3 dargestellt, in der das zweite, dritte und vierte Filterelement 2, 3, 4 jeweils in die Position gerückt sind, die zuvor noch das erste, zweite und dritte Filterelement 1, 2, 3, 4 eingenommen hatten. Das zweite Filterelement 2 befindet sich nunmehr an der Wechselöffnung 6 und kann nunmehr abermals von dem Bedienpersonal mit Hilfe der Schutzsack-Wechselmethode entfernt werden. Zuvor muss die Mitnehmerstange 10, dessen der Wechselöffnung 6 zugewandtes Ende 17 sich nach Ausführung des Förderhubs ebenfalls in dem nicht dargestellten Schutzsack befindet, wieder in die entgegen gesetzte Richtung geschoben werden, das heißt der Rückhub muss ausgeführt werden, so dass sich die Mitnehmerstange 10 wieder vollkommen im Filtergehäuse 5 befindet.

In der Figur 4 ist die Filtervorrichtung 100 nach Herausnahme des zweiten Filterelements 2 gezeigt, wobei die Mitnehmerstange 10 um ihren Rückhub bewegt wurde. Darüber hinaus wurde der Bedienhebel 15 - wie in der Figur 4a gezeigt - um einen Winkel β von 90° gegenüber der Längsachse der Mitnehmerstange 10 gedreht, so dass sich ebenfalls letztgenannte um den gleichen Winkel gedreht hat. In dieser gedrehten Stellung befinden sich die Mitnehmerelemente M1 und M3 - wie in der Figur 4b gezeigt - in einer horizontalen Lage (um 180° versetzt) und das Mitnehmerelement M2 zeigt vertikal nach oben in Richtung der Filterelemente 1, 2, 3, 4, wobei es hinter das nunmehr an dritter Position (von links nach rechts betrachtet) befindliche vierte Filterelement 4 greift. In der Figur 4 ist zu erkennen, dass das zweite Mitnehmerelement M2 Z-förmig ausgebildet ist, um nicht an die erste Führung 11 zu stoßen.

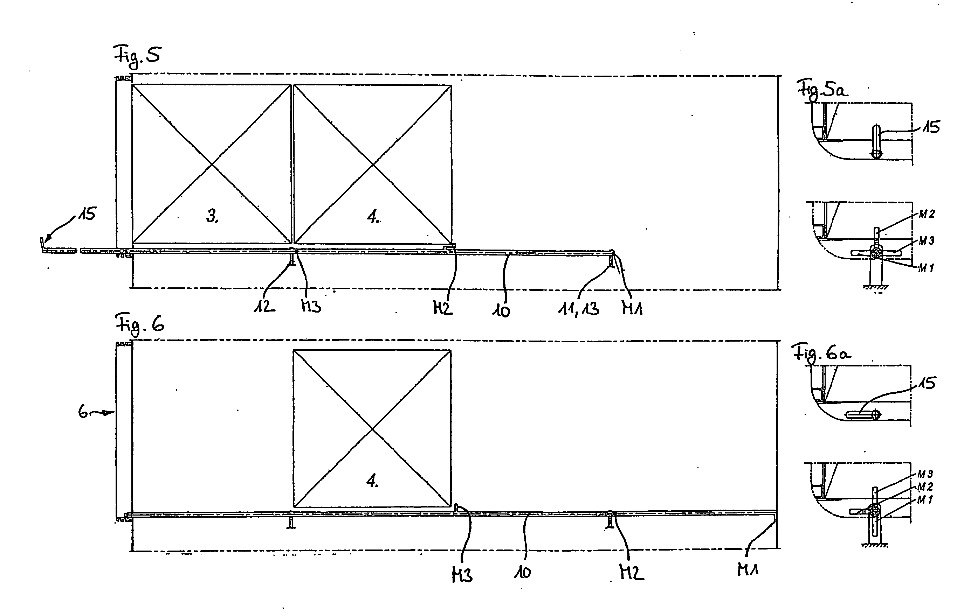

Wird die Mitnehmerstange 10 nun abermals um ihren Förderhub bewegt, so werden das noch verbleibende vierte und dritte Filterelement 4, 3 in Richtung zu der Wechselöffnung 6 bewegt, bis das dritte Filterelement 3 an die Wechselöffnung 6 gelangt, wobei dann das erste Mitnehmerelement M 1 wiederum an den Anschlag 13 gerät, was in der Figur 5 zu erkennen ist. Aus den Figuren 5a und 5b gehen die entsprechenden Positionen des Handhebels 15 und der Mitnehmerelemente M 1, M2, M3 hervor.

Nachdem die Mitnehmerstange 10 wieder um ihren Rückhub bewegt wurde und das dritte Filterelement 3 abermals mittels der Schutzsack-Wechselmethode entfernt wurde, befindet sich die Filtervorrichtung 100 in der in der Figur 6 gezeigten Position, in der nur noch das vierte Filterelement 4 verbleibt.

Bei einer weiteren Drehung des Handhebels 15 um 90° (Figur 6a) gelangt das dritte Mitnehmerelement M3 in eine vertikal nach oben gerichtete Lage, in der es hinter dem nun vierten Filterelement 4 angreift. Wie in der Figur 6b zu sehen, weist dabei das erste Mitnehmerelement M 1 vertikal nach unten und das zweite Mitnehmerelement M2 verläuft horizontal.

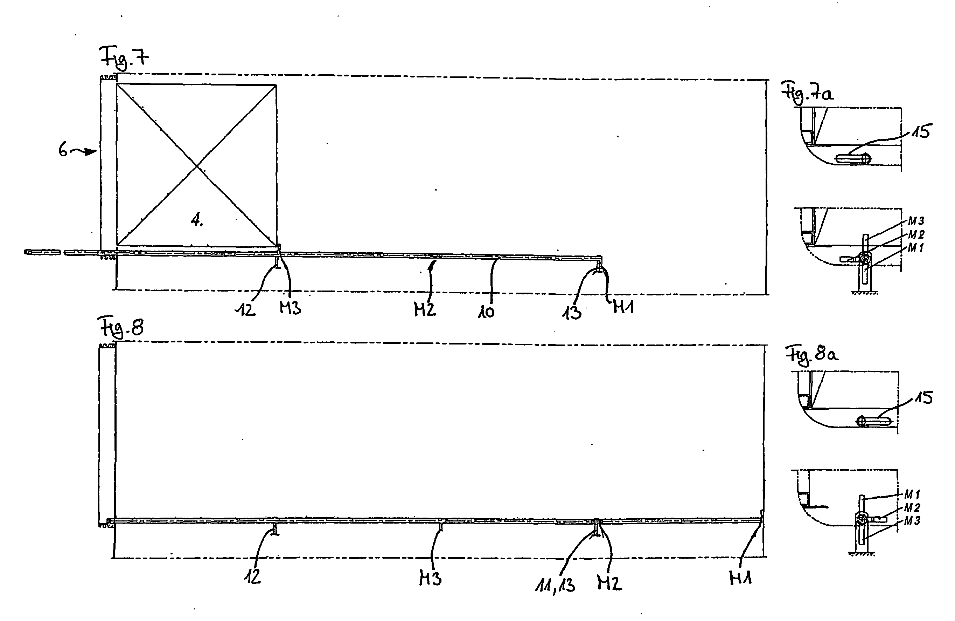

Die Figuren 7 bis 8b zeigen die Filtervorrichtung 100 und ihre Elemente noch nach der Bewegung des vierten Filterelements 4 in Richtung der Wechselöffnung 6 beziehungsweise nach dessen Entnahme.

In den Figuren 9 bis 10b ist eine alternative Ausbildung der Fördereinrichtung 8' gezeigt, bei der letztgenannte nämlich durch ein inneres Rohr 18 und ein äußeres Rohr 19 gebildet wird, so dass auf Führungen gemäß der Figur 1 verzichtet werden kann. Das äußere Rohr 19 übernimmt die Funktion der Mitnehmerstange 10' und das innere Rohr 18 die der Führung, wobei das äußere Rohr 19 teleskopartig relativ zu dem inneren Rohr 18 verschiebbar ist. Bei dieser Ausführungsform wird der Anschlag 13' durch eine feststehende Hülse 20 gebildet, gegen die ein an dem äußeren Rohr 19 befestigtes Stopelement 21 nach Ausführung des Förderhubs anschlägt.

### In den Figuren sind

- 100: Filtervorrichtung
- 1: erstes Filterelement
- 2: zweites Filterelement
- 3: drittes Filterelement
- 4: viertes Filterelement
- 5: Filtergehäuse
- 6: Wechselöffnung
- 7: Wechselöffnungskragen
- 8, 8': Fördereinrichtung
- 9: Förderorgan
- 10, 10': Mitnehmerstange
- 11: erste Führung
- 12: zweite Führung
- 13, 13': Anschlag
- 14: Befestigungselement
- 15: Handhebel
- 16: hintere Kante
- 17: Ende
- 18: inneres Rohr
- 19: äußeres Rohr
- 20: Hülse
- 21: Stopelement

- L_{F}: Länge Filtergehäuse
- L_{V}: Länge Verschiebeweg
- L_{FE}: Länge Filterelement
- M 1: erstes Mitnehmerelement
- M2: zweites Mitnehmerelement
- M3: drittes Mitnehmerelement
- α, α', β: Winkel

## Patentansprüche

1. Filtervorrichtung (100) zur Filtration eines mit Aerosolen und/oder Stäuben beladenen Gasstroms, mit einem Gehäuse (5), das einen Rohgaseinlass und einen Reingasauslass aufweist und mit einer Mehrzahl von kastenförmigen Filterelementen (1, 2, 3, 4) bestückbar ist, die auf einer Halte- und Führungseinrichtung linear verschiebbar und in einer Betriebsstellung hintereinander angeordnet und zwecks Wechsel durch eine Wechselöffnung (6) des Gehäuses (5) aus diesem entnehmbar bzw. in dieses einführbar sind, wobei die Filterelemente (1, 2, 3, 4) zusammen mit der Halte- und Führungseinrichtung eine Trennung zwischen einer Rohgasseite und einer Reingasseite der Vorrichtung (100) dergestalt bilden, dass der zu filtrierende Gasstrom nur durch in den Filterelementen (1, 2, 3, 4) befindliches Filtermedium hindurch von der Rohgasseite auf die Reingasseite übertreten kann, wobei eine Fördereinrichtung (8, 8', 8") vorgesehen ist, mit der ein oder mehrere Filterelement(e) (1, 2, 3, 4) entlang der Halte- und Führungseinrichtung verschiebbar ist bzw. sind, wobei die Fördereinrichtung (8, 8', 8") ein langgestrecktes Förderorgan (9, 22) aufweist, das mit einem Mitnehmerelement (M1, 27) ausgestattet ist, das mit einem Filterelement (1, 2, 3, 4) koppelbar ist, wobei mindestens ein Filterelement (1, 2, 3, 4) bei einem Förderhub des Förderorgans (9, 22) in Richtung auf die Wechselöffnung (6) zu förderbar ist, **dadurch gekennzeichnet, dass** das Förderorgan (9) mindestens ein weiteres Mitnehmerelement (M2, M3) besitzt, das in Längsrichtung des Förderorgans (9) betrachtet zum einen um einen Winkel α gegenüber dem ersten Mitnehmerelement (M 1) verdreht und zum anderen in einem Abstand von dem ersten Mitnehmerelement (M 1) angeordnet ist, der mindestens der Länge (L_{FE}) eines Filterelements (1, 2, 3, 4) entspricht.

2. Filtervorrichtung nach Anspruch 1, **dadurch gekennzeichnet, dass** das Förderorgan (9) eine Mitnehmerstange (10, 10') ist, an der eine Mehrzahl von Mitnehmerelementen (M1, M2, M3), vorzugsweise in Form von radial von der Mitnehmerstange (10, 10') abstehenden Mitnehmerarmen, angebracht ist, wobei der Abstand zwischen benachbarten Mitnehmerelementen (M 1, M2, M3) ungefähr der Länge (L_{FE}) eines Filterelements (1, 2, 3, 4) entspricht.

3. Filtervorrichtung nach Anspruch 2, **dadurch gekennzeichnet, dass** benachbarte Mitnehmerelemente (M1, M2, M3), in Längsrichtung der Mitnehmerstange (10, 10') betrachtet, um 90° gegeneinander verdreht sind:

4. Filtervorrichtung nach einem der Ansprüche 1 bis 3, **dadurch gekennzeichnet, dass** das Förderorgan (9) von einer Ruhestellung, in der es vollständig innerhalb des Gehäuses (5), dessen Wechselöffnung (6) mit einem Deckel verschlossen ist, angeordnet ist, durch Manipulation eines Betätigungselements (14), vorzugsweise in Form eines Handhebels (15) oder Handrades, das an dem der Wechselöffnung (6) zugeordneten Endabschnitt (17) des Förderorgans (9) angeordnet ist, in eine Entnahmestellung verlagerbar ist, in der sich das Förderorgan (9) mit seinem vorgenannten Endabschnitt (17) in dem Wechselsack befindet.

5. Vorrichtung nach einem der Ansprüche 2 bis 4, **dadurch gekennzeichnet, dass** dem Betätigungselement (14) eine Positionsanzeige zugeordnet ist, der für einen Bediener Informationen über die Winkelstellung der Mitnehmerstange (10, 10') entnehmbar sind.

6. Vorrichtung nach einem der Ansprüche 2 bis 5, **dadurch gekennzeichnet, dass** die Fördereinrichtung (8') aus einem inneren Rohr (18) und einem äußeren Rohr (19) gebildet ist, wobei die Mitnehmerstange (10') durch das äußere Rohr (19) gebildet wird, das teleskopartig relativ zu dem inneren Rohr (18) verschiebbar ist.

7. Vorrichtung nach einem der Ansprüche 1 bis 6, **dadurch gekennzeichnet, dass** das Förderorgan (9) auf Stützen (11, 12) der Fördereinrichtung (8) abgestützt ist, die eine Relativverschiebung zwischen Stützen (11, 12) und Förderorgan (9) erlauben.

8. Verfahren zum Wechseln von Filterelementen (1, 2, 3, 4) einer Filtrationsvorrichtung (100) zur Filtration eines mit Aerosolen und/oder Stäuben beladenen Gasstroms, mit einem Gehäuse (5), das einen Rohgaseinlass und einen Reingasauslass aufweist und mit einer Mehrzahl von kastenförmigen Filterelementen (1, 2, 3, 4) bestückbar ist, die auf einer Halte- und Führungseinrichtung linear verschiebbar und in einer Betriebsstellung linear hintereinander angeordnet und zwecks Wechsel durch eine Wechselöffnung (6) aus dem Gehäuse (5) entnehmbar bzw. in das Gehäuse (5) einführbar sind, wobei die Filterelemente (1, 2, 3, 4) zusammen mit der Halte- und Führungseinrichtung eine Trennung zwischen einer Rohgasseite und einer Reingasseite der Filtervorrichtung (100) dergestalt bilden, dass der zu filtrierende Gasstrom nur durch ein in den Filterelementen (1, 2, 3, 4) befindliches Filtermedium von der Rohgasseite auf die Reingasseite übertreten kann, wobei die Filterelemente (1, 2, 3, 4) einzeln nacheinander aus dem Gehäuse (5) entnommen und mit Hilfe der bekannten Schutzsack-Wechselmethode jeweils einzeln in einem Wechselsack verpackt und gasdicht darin verschweißt von der Filtervorrichtung (100) entfernt werden, wobei ein näher an der Wechselöffnung (6) befindliches Filterelement (1, 2, 3, 4) mittels eines weiter von der Wechselöffnung (6) entfernten Filterelementes (1, 2, 3, 4) auf die Wechselöffnung (6) zu befördert wird, wobei ein Filterelement (1, 2, 3, 4) mit einem Förderorgan (9, 22) einer Fördereinrichtung (8, 8', 8") gekoppelt wird, wobei während des Beförderns des Filterelements (1, 2, 3, 4) mittels des Förderorgans (9, 22) Zugkräfte und von dem mit dem Förderorgan (9, 22) gekoppelten Filterelement (1, 2, 3, 4) auf das mindestens eine, näher an der Wechselöffnung (6) befindliche Filterelement (1, 2, 3, 4) Druckkräfte übertragen werden, **dadurch gekennzeichnet, dass** die Kopplung zwischen dem Förderorgan (9) und dem jewelligen Filterelement (1, 2, 3, 4) **dadurch** hergestellt oder aufgehoben wird, dass das Förderorgan (9) um seine Längsachse, die sich parallel zu der Halte- und Führungseinrichtung erstreckt, gedreht wird.

## Claims

1. A filter device (100) for the filtration of a gas stream charged with aerosols and/or dusts, having a housing (5), which has a crude gas inlet and a clear gas outlet, and can be equipped with a plurality of box-shaped filter elements (1, 2, 3, 4), which are arranged on a holding and guiding device so they are linearly displaceable and are one behind another in an operating position and are removable through a replacement opening (6) of the housing (5) or insertable therein for the purpose of replacement, the filter elements (1, 2, 3, 4), together with the holding and guiding device, forming a partition between a crude gas side and a clear gas side of the device (100) in such a manner that the gas stream to be filtered can only pass through the filter medium located in the filter elements (1, 2, 3, 4) from the crude gas side to the clear gas side, a conveyor device (8, 8', 8") being provided, using which one or more filter elements (1, 2, 3, 4) is/are displaceable along the holding and guiding device, the conveyor device (8, 8', 8") having an elongated conveyor member (9, 22), which is equipped with a driver element (M1, 27), which can be coupled to a filter element (1, 2, 3, 4), at least one filter element (1, 2, 3, 4) being able to be conveyed during a conveyor stroke of the conveyor member (9, 22) in the direction toward the replacement opening (6), **characterized in that** the conveyor member (9) has at least one further driver element (M2, M3), which, viewed in the longitudinal direction of the conveyor member (9), on the one hand, is pivoted by an angle α in relation to the first driver element (M1) and, on the other hand, is arranged at a distance from the first driver element (M1), which at least corresponds to the length (L_{FE}) of a filter element (1, 2, 3, 4).

2. The filter device according to Claim 1, **characterized in that** the conveyor member (9) is a driver rod (10, 10'), on which a plurality of driver elements (M1, M2, M3) is attached, preferably in the form of driver arms protruding radially from the driver rod (10, 10'), the distance between adjacent driver elements (M 1, M2, M3) approximately corresponding to the length (L_{FE}) of one filter element (1, 2, 3, 4).

3. The filter device according to Claim 2, **characterized in that** adjacent driver elements (M 1, M2, M3), viewed in the longitudinal direction of the driver rod (10, 10'), are pivoted by 90° to one another.

4. The filter device according to one of Claims 1 to 3, **characterized in that** the conveyor member (9) is displaceable from a rest position, in which it is arranged completely inside the housing (5), whose replacement opening (6) is closed using a cover, by manipulation of an actuating element (14), preferably in the form of a hand lever (15) or hand wheel, which is arranged on the end section (17) of the conveyor member (9) assigned to the replacement opening (6), into a removal position, in which the conveyor member (9) is located having its above-mentioned end section (17) in the replacement sack.

5. The device according to one of Claims 2 to 4, **characterized in that** a position display is assigned to the actuating element (14), from which information about the angular position of the driver rod (10, 10') can be inferred for an operator.

6. The device according to one of Claims 2 to 5, **characterized in that** the conveyor device (8') is formed from an inner tube (18) and an outer tube (19), the driver rod (10') being formed by the outer tube (19), which is telescopically displaceable relative to the inner tube (18).

7. The device according to one of Claims 1 to 6, **characterized in that** the conveyor member (9) is supported on supports (11, 12) of the conveyor device (8), which allow a relative displacement between supports (11, 12) and conveyor member (9).

8. A method for replacing filter elements (1, 2, 3, 4) of a filtration device (100) for the filtration of a gas stream charged with aerosols and/or dusts, having a housing (5), which has a crude gas inlet and a clean gas outlet and can be equipped with a plurality of box-shaped filter elements (1, 2, 3, 4), which are arranged linearly displaceable on a holding and guiding device and are linearly one behind another in an operating position and are removable from the housing (5) or insertable into the housing (5) through a replacement opening (6) for the purpose of replacement, the filter elements (1, 2, 3, 4), together with the holding and guiding device, forming a partition between a crude gas side and a clean gas side of the filter device (100) in such a manner that the gas stream to be filtered can only pass through a filter medium located in the filter elements (1, 2, 3, 4) from the crude gas side to the clean gas side, the filter elements (1, 2, 3, 4) being removed individually in succession from the housing (5) and each being packed individually in a replacement sack with the aid of the known protective sack replacement method and being removed welded gas-tight therein from the filter device (100), a filter element (1, 2, 3, 4) located closer to the replacement opening (6) being conveyed to the replacement opening (6) by means of a filter element (1, 2, 3, 4) farther away from the replacement opening (6), a filter element (1, 2, 3, 4) being coupled to a conveyor member (9, 22) of a conveyor device (8, 8', 8"), during the conveyance of the filter element (1, 2, 3, 4) by means of the conveyor member (9, 22), traction forces and, by the filter element (1, 2, 3, 4) coupled to the conveyor member (9, 22), pressure forces being transmitted to the at least one filter element (1, 2, 3, 4) located closer to the replacement opening (6), **characterized in that** the coupling between the conveyor member (9) and the respective filter element (1, 2, 3, 4) is produced or canceled out **in that** the conveyor member (9) is rotated around its longitudinal axis, which extends parallel to the holding and guiding device.

## Revendications

1. Dispositif de filtration (100) pour filtrer un flux gazeux chargé d'aérosols et/ou de poussières, avec un boîtier (5) qui comporte une entrée de gaz brut et une sortie de gaz purifié et qui peut être équipé avec une pluralité d'éléments de filtration (1, 2, 3, 4) en forme de caissons, qui sont déplaçables de façon linéaire sur un système de retenue et de guidage et qui sont disposés les uns derrière les autres dans une position de service et qui pour être remplacés peuvent être retirés ou introduits dans le boîtier (5) par une ouverture de remplacement (6) de ce dernier, les éléments de filtration (1, 2, 3, 4) formant en association avec le système de retenue et de guidage une séparation entre un côté pour gaz brut et un côté pour gaz purifié du dispositif (100), de telle sorte que le flux gazeux à filtrer ne puisse passer du côté gaz brut vers le côté gaz purifié qu'à travers un milieu de filtration se trouvant dans les éléments de filtration (1, 2, 3, 4), un système de transport (8, 8',8") à l'aide duquel un ou plusieurs élément(s) de filtration (1, 2, 3, 4) est ou sont déplaçable(s) le long du système de retenue et de guidage étant prévu, le système de transport (8, 8',8") comportant un organe de transport (9, 22) allongé qui est équipé d'un élément d'entraînement (M1, 27), susceptible de s'accoupler à un élément de filtration (1, 2, 3, 4), lors d'une course de transport de l'organe de transport (9, 22), au moins un élément de filtration (1, 2, 3, 4) pouvant être transporté en direction de l'ouverture de remplacement (6), **caractérisé en ce que** l'organe de transport (9) dispose d'au moins un élément d'entraînement (M2, M3) supplémentaire, qui considéré en direction longitudinale de l'organe de transport (9) est disposé d'une part en étant tourné avec un angle α par rapport au premier élément d'entraînement (M1) et d'autre part à une distance du premier élément d'entraînement (M1) qui correspond au moins à la longueur (L_{FE}) d'un élément de filtration (1, 2, 3, 4).

2. Dispositif de filtration selon la revendication 1, **caractérisé en ce que** l'organe de transport (9) est une barre d'entraînement (10, 10'), sur laquelle est montée une pluralité d'éléments d'entraînement (M 1, M2, M3), de préférence sous la forme de bras d'entraînement éloignés en direction radiale de la barre d'entraînement (10, 10'), la distance entre des éléments d'entraînement (M1, M2, M3) voisins correspondant approximativement à la longueur (L_{FE}) d'un élément de filtration (1, 2, 3, 4).

3. Dispositif de filtration selon la revendication 2, **caractérisé en ce que**, considérés en direction longitudinale de la barre d'entraînement (10, 10'), des éléments d'entraînement (M1, M2, M3) voisins sont tournés l'un par rapport à l'autre d'un angle de 90°.

4. Dispositif de filtration selon l'une quelconque des revendications 1 à 3, **caractérisé en ce que** l'organe de transport (9) est déplaçable d'une position de repos dans laquelle il est entièrement disposé à l'intérieur du boîtier (5) dont l'ouverture de remplacement (6) est fermée par un couvercle, par manipulation d'un élément de manoeuvre (14), de préférence sous la forme d'un levier manuel (15) ou d'un volant qui est disposé sur la partie d'extrémité (17) de l'organe de transport (9) qui est associée à l'ouverture de remplacement (6) dans une position de retrait dans laquelle avec sa partie d'extrémité (17) précitée, l'organe de transport (9) se trouve dans le sac de remplacement.

5. Dispositif selon l'une quelconque des revendications 2 à 4, **caractérisé en ce qu'**un affichage de position, sur lequel l'opérateur peut trouver des informations sur la position angulaire de la barre d'entraînement (10, 10') est associé à l'élément de manoeuvre (14).

6. Dispositif selon l'une quelconque des revendications 2 à 5, **caractérisé en ce que** le système de transport (8') est formé d'un tube interne (18) et d'un tube externe (19), la barre d'entraînement (10') étant formée par le tube externe (19), qui est déplaçable à la manière d'un télescope par rapport au tube interne (18).

7. Dispositif selon l'une quelconque des revendications 1 à 6, **caractérisé en ce que** l'organe de transport (9) est supporté par des appuis (11, 12) du système de transport (8), qui permettent un déplacement relatif entre les appuis (11, 12) et l'organe de transport (9).

8. Procédé de remplacement d'éléments de filtration (1, 2, 3, 4) d'un dispositif de filtration (100) pour filtrer un flux gazeux chargé d'aérosols et/ou de poussières, avec un boîtier (5) qui comporte une entrée de gaz brut et une sortie de gaz purifié et qui peut être équipé avec une pluralité d'éléments de filtration (1, 2, 3, 4) en forme de caissons, qui sont déplaçables de façon linéaire sur un système de retenue et de guidage et qui sont disposés les uns derrière les autres dans une position de service et qui pour être remplacés peuvent être retirés ou introduits dans le boîtier (5) par une ouverture de remplacement (6) de ce dernier, les éléments de filtration (1, 2, 3, 4) formant en association avec le système de retenue et de guidage une séparation entre un côté pour gaz brut et un côté pour gaz purifié du dispositif (100), de telle sorte que le flux gazeux à filtrer ne puisse passer du côté gaz brut vers le côté gaz purifié qu'à travers un milieu de filtration se trouvant dans les éléments de filtration (1, 2, 3, 4), les éléments de filtration (1, 2, 3, 4) étant retirés successivement un à un du boîtier (5) et à l'aide de la méthode de remplacement connue par sac de protection, étant emballés chacun un à un dans un sac de remplacement et soudés dans ce dernier de manière étanche au gaz, étant retirés du dispositif de filtration (100), un élément de filtration (1, 2, 3, 4) plus proche de l'ouverture de remplacement (6) étant transporté à l'aide d'un élément de filtration (1, 2, 3, 4) plus éloigné de l'ouverture de remplacement (6) en direction de l'ouverture de remplacement (6), un élément de filtration (1, 2, 3, 4) étant accouplé avec un organe de transport (9, 22) d'un système de transport (8, 8',8"), pendant le transport de l'élément de filtration (1, 2, 3, 4) à l'aide de l'organe de transport (9, 22), des forces de traction et par l'élément de filtration (1, 2, 3, 4) accouplé avec l'organe de transport (9, 22), des forces de pression étant transmises sur l'au moins un élément de filtration (1, 2, 3, 4) plus proche de l'ouverture de remplacement (6), **caractérisé en ce que** l'accouplement entre l'organe de transport (9) et l'élément de filtration (1, 2, 3, 4) concerné est établi ou annulé de telle sorte que l'organe de transport (9) soit tourné autour de son axe longitudinal, qui s'étend à la parallèle du système de retenue et de guidage.
